# EUROPÄISCHE PATENTSCHRIFT

(11) **EP 1 169 915 B1**
(45) Veröffentlichungstag und Bekanntmachung des Hinweises auf die Patenterteilung: **03.01.2007**
(21) Anmeldenummer: 01116147.8
(22) Anmeldetag: 03.07.2001
(51) Int. Cl.: A01K 5/01

(54) **Fütterungssystem für Haustiere**
Feeding system for pets
Système d'alimentation pour animaux domestiques

(30) Priorität: 03.07.2000 DE 20011293 U
(43) Veröffentlichungstag der Anmeldung: 09.01.2002
(73) Patentinhaber: Lutz, Anton, 86865 Markt Wald (DE)
(72) Erfinder: Lutz, Anton, 86865 Markt Wald (DE)
(74) Vertreter: Fiener, Josef

(56) Entgegenhaltungen:
- DE-U- 8 915 321
- DE-U- 29 906 020
- FR-A- 2 388 731
- FR-A- 2 540 705
- FR-A- 2 669 507
- GB-A- 1 035 658
- US-A- 2 912 788
- US-A- 4 215 650
- US-A- 4 488 565

## Beschreibung

Die Erfindung betrifft ein Fütterungssystem insbesondere für Nagetiere, mit den oberbegrifflichen Merkmalen des Anspruches 1.

Getrocknete Futterpflanzen, insbesondere getrocknetes Gras (Heu), werden üblicherweise an Nagetiere, wie z. B. Kaninchen, Meerschweinchen und Hamster, verfüttert, indem das Heu entweder lose in den Käfig oder das Gehege gelegt wird oder aber loses Heu in eine Futterraufe gegeben wird und die Tiere sich davon bedienen können. Der Nachteil der Verfütterung von Heu auf dem Boden liegt vor allem darin, daß dieses sehr stark verschmutzt wird, da die Tiere natürlich nicht nur davon fressen, sondern es auch als Spielecke oder zum Schlafen benutzen. Das verschmutzte Heu wird von den Tieren nicht mehr gefressen. So verbleiben immer Reste, die der Tierbesitzer mit der Einstreu des Käfigs oder des Geheges verwerfen muß. Bei der Fütterung von Heu in Raufen ist das Problem der Verschmutzung des Heus zwar minimiert, dennoch droht auch hier die Gefahr, daß die Tiere das Heu, welches lose in den Raufen liegt, aus diesen herausziehen, über den Käfigboden ziehen und das Futter dadurch verschmutzt.

Allgemein bringt die Verfütterung von Heu in loser Form mehrere Nachteile mit sich. Zum einen ist die Gefahr der Verschmutzung durch die Tiere selbst sehr groß, wie oben erläutert. Weiterhin ist nachteilig, daß bei Verfütterung von losem Heu die Umgebung des Geheges oftmals angeschmutzt wird, einmal dadurch, daß der Tierhalter beim Einbringen des Heus in den Käfig oder in die Raufe sehr leicht einzelne Halme verliert, zum anderen sind in Heu auch immer Samen, Blütenteile oder kleine Pflanzenteile enthalten, sog. Heublumen, die ebenfalls aus dem für die Fütterung vorgesehen Bündel Heu sehr leicht herausfallen und die Käfigumgebung verschmutzen können. Dies gilt auch für das Fütterungssystem gemäß der GB-A-1 035 658, die die oberbegrifflichen Merkmale des Anspruches 1 zeigt, wobei Standard-Heuballen verwendet werden. Ein weiterer Nachteil bei der Verfütterung von Heu in loser Form ist darin zu sehen, daß der Lagerbedarf hierfür sehr hoch ist. So nimmt beispielsweise 1 kg loses Heu ca. 30 1 Volumen ein. Ferner hat der Tierbesitzer das Problem, daß er das Heu in einem Beutel, Sack oder ähnlichem unterbringen muß, wodurch die Sperrigkeit der Heuvorräte zusätzlich erhöht wird.

Es ist bis heute keine Möglichkeit bekannt, getrocknete Futterpflanzen, insbesondere Heu, auf saubere, platzsparende und ökonomische Art und Weise zu verfüttern. Aufgabe der vorliegenden Erfindung ist daher, ein Fütterungssystem zur Verfütterung von getrockneten Pflanzen, insbesondere Heu an Nagetiere, zur Verfügung zu stellen.

Diese Aufgabe wird gelöst durch ein Fütterungssystem nach Anspruch 1. Bevorzugte Ausgestaltungen sind Gegenstand der Unteransprüche.

Das erfindungsgemäße Fütterungesystem besteht zum einen aus einem Aufnahmebehälter, welcher das Futter aufnimmt, und zum anderen aus verpreßtem Futter, wobei die Maße des Aufnahmebehälters und des verpreßten Futters so aneinander angepaßt sind, daß das Futterstück in Breite und Tiefe annähernd dem Innenraum des Aufnahmebehälters entspricht. Weiterhin ist der Aufnahmebehälter so gestaltet, daß zumindest eine Seitenfläche zur Bodenfläche hin zumindest teilweise geöffnet ist, so daß das Tier Zugang zum Futterstück hat und von diesem unmittelbar Futter entnehmen bzw. abbeißen kann. Hauptvorteil der vorliegenden Erfindung ist, daß dem Tier das Futter stets sauber und frisch angeboten wird. Da das Tier nur die Menge unmittelbar entnehmen kann, die es frißt, werden keine Futterreste verschmutzt. Durch die Führung des Aufnahmebehälters wird dem Tier neues Futter (selbsttätig durch die Schwerkraft) immer dann zugeführt, wenn an der Bodenfläche das Futter aufgebraucht wurde.

Weiterhin ist vorteilhaft, daß das Fütterungssystem zugleich der Bevorratung von getrockneten Futterpflanzen dient, zum einen da die Futterpflanzen in stark komprimierter Form vorliegen, und zum anderen, weil die Futterstücke in dem Aufnahmebehälter trocken und sicher vor Zugriff durch das Tier gelagert sind. Dies ist insbesondere dann vorteilhaft, wenn der Tierhalter beispielsweise für längere Zeit nicht vor Ort ist, da dann dem Tier ein größerer Heuvorrat zur Verfügung gestellt werden kann, den es fortlaufend und ohne Verluste entnehmen kann. Die Formung des Heus in kompakte Blöcke bringt auch einen Lagervorteil mit sich, da zum einen das benötigte Lagervolumen pro Gewichtseinheit Heu stark reduziert ist, und zum anderen durch die kompakte Blockform eine Aufschichtung einfach möglich ist.

Nachfolgend werden mehrere Ausführungsbeispiele der Erfindung anhand der Zeichnungen näher erläutert und beschrieben. Es zeigen:
- Fig. 1: ein Ausführungsbeispiel des erfindungsgemäßen Fütterungssystems in auseinandergezogener perspektivischer Darstellung;
- Fig. 2: ein bevorzugtes Ausführungsbeispiel eines Aufnahmebehälters in perspektivischer Darstellung;
- Fig. 3: ein weiteres Ausführungsbeispiel eines Aufnahmebehälters in perspektivischer Darstellung; und
- Fig. 4: ein abgewandeltes Ausführungsbeispiel eines Aufnahmebehälters in perspektivischer Darstellung.

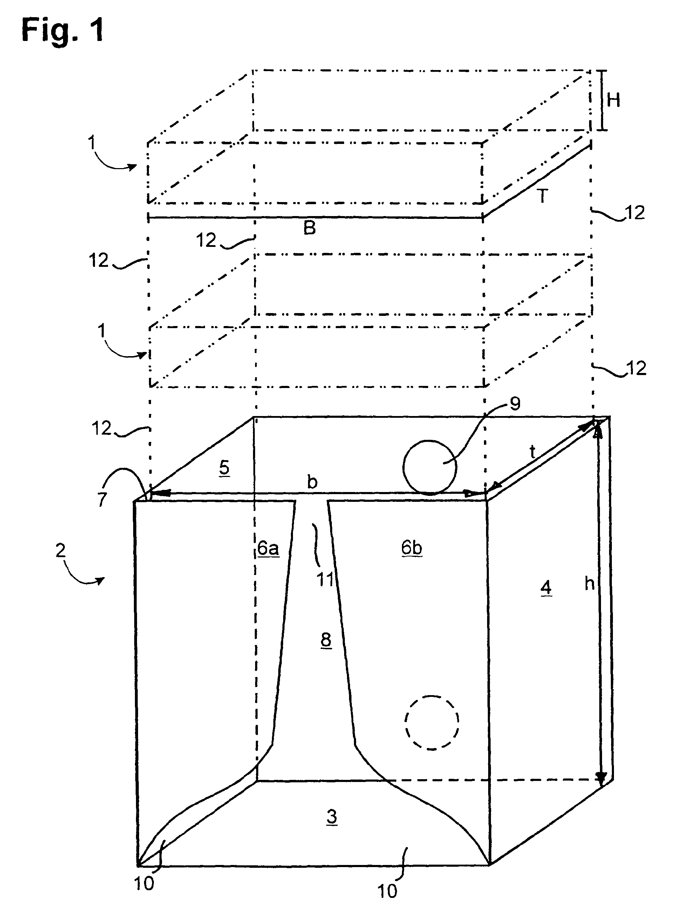

Fig. 1 zeigt ein erfindungsgemäßes Fütterungssystem in auseinandergezogener perspektivischer Darstellung. Es besteht aus zumindest einem strichpunktiert dargestellten Futterstück 1 und einem Aufnahmebehälter 2. Der Aufnahmebehälter 2 besteht aus einer Bodenfläche 3, zwei Seitenflächen 4 und 5 und einer vorzugsweise zweiflügeligen Frontseite 6a, 6b. Weiterhin ist eine Rückseitenfläche 8 vorgesehen, die eine oder mehrere Öffnungen 9 aufweist, welche der Befestigung des Aufnahmebehälters 2 am Käfig oder Gehege dienen.

Der Aufnahmebehälter 2 weist an zumindest einer Seite, im vorliegenden Ausführungsbeispiel der Fig. 1 der Frontseite 6a, 6b, unterseits eine öffnung 10 auf, die dazu dient, daß das Tier Futter von dem Futterstück 1 entnehmen kann. Durch die Zweiteilung der Frontseite in die beiden Teilflächen 6a, 6b entsteht eine mittige Spalt-Öffnung 11, durch die der Tierhalter den Füllstand des Aufnahmebehälters 2 erkennen kann, beispielsweise ob noch drei oder vier Futterstücke 1 darin gestapelt sind. Insbesondere bildet ein Futterstück 1 jeweils eine Tagesration, so daß der Tierhalter z.B. leicht einen Wochenendausflug planen kann.

Aus Fig. 1 wird deutlich, daß die Maße von Futterstück 1 und Aufnahmebehälter 2 aufeinander abgestimmt sind, so daß die Außenmaße der Breite B und Tiefe T des Futterstückes 1 annähernd den Innenmaßen b, t des Aufnahmebehälters 2 entsprechen, zusätzlich angedeutet durch die unterbrochenen Linien 12 der auseinandergezogenen Darstellung der Fig. 1.

Das Futterstück 1 ist so gestaltet, daß mehrere Futterstücke 1 aufeinanderliegend in den Aufnahmebehälter 2 eingeführt bzw. gestapelt werden können, wie dies in Fig. 1 angedeutet ist.

Das Futterstück 1 besteht aus getrockneten, verpreßten Futterpflanzen, wobei als bevorzugte Bestandteile getrocknetes Gras, Wiesenkräuter und Gartenkräuter vorgesehen sind. Weiterhin können als Zumischbestandteile noch getrocknete andere Pflanzenteile, insbesondere Gemüse, Obst oder Laub, hinzukommen. Das getrocknete Futter wird unter Hochdruck miteinander verpreßt, insbesondere in einer Kasten-Brikettierpresse, wobei bevorzugt vorgesehen ist, daß das Preßgut vor dem Verpressen zerkleinert wird, beispielsweise gehäckselt oder geschnitten wird. Es ist bevorzugt vorgesehen, daß keine Haltevorrichtungen, wie z. B. Schnüre oder Netze, vorhanden sind, die dem Zusammenhalt der getrockneten Futterpflanzen dienen. Das Futter behält einzig bedingt durch die beim Preßvorgang auftretenden Kräfte und Verschlingungen der Halme seine Form. Zur Schaffung von günstigen Lager- und Transportbedingungen kann es vorteilhaft sein, einzelne oder mehrere Futterstücke 1 gemeinsam zu bündeln, beispielsweise durch Verschweißen in Folie oder durch Einführen in eine Karton- oder Papierverpackung.

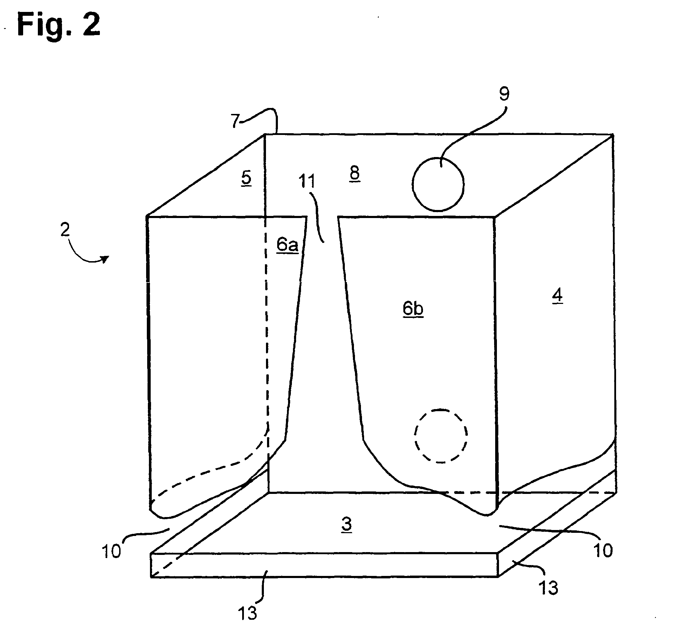

Fig. 2 zeigt ein weiteres Ausführungsbeispiel des Aufnahmebehälters 2. Eine verbesserte Futteraufnahme vom Futterstück 1 durch das Tier wird dadurch erzielt, daß die Öffnung 10 an drei Seiten entlang der Bodenfläche 3 verläuft. Dadurch ist das Tier in der Lage, von mehreren Seiten das Futterstück 1 abfressen zu können. Es ist bevorzugt vorgesehen, daß die zum Ausschluß von Verletzungen abgerundete Öffnung 10 entlang von zumindest Teilen der beiden Seitenflächen 4 und 5 und der Frontflächen 6a, 6b verläuft. Die Bodenfläche 3 des Aufnahmebehälters 2 ist im Ausführungsbeispiel der Fig. 2 von einem hochstehenden Rand 13 umgeben. Dieser zur Oberseite 7 des Aufnahmebehälters 2 weisende Rand 13 dient der besseren Fixierung des Futterstückes 1 im Aufnahmebehälter 2. Auf diese Art und Weise ist das Futterstück 1 noch besser gegen Verschmutzung geschützt.

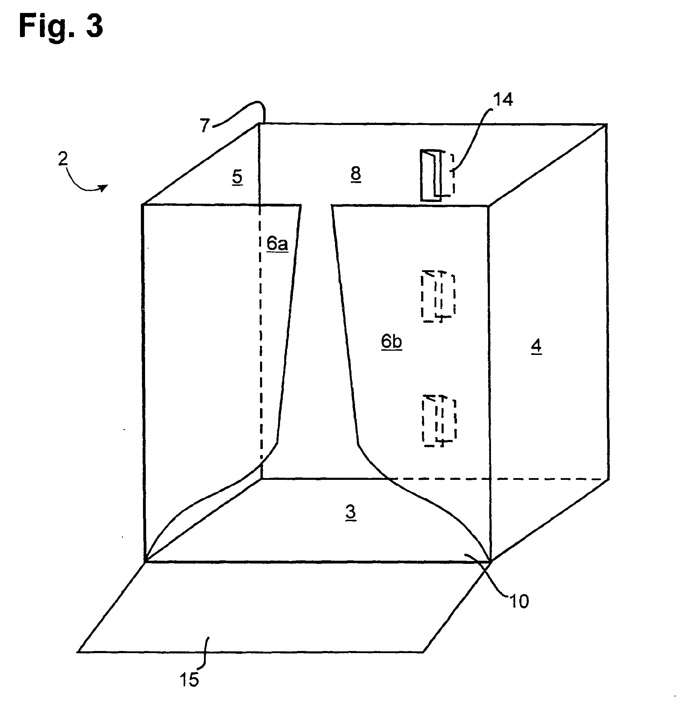

Fig. 3 zeigt ein weiteres Ausführungsbeispiel des Aufnahmebehälters 2. Angrenzend an seine Bodenfläche 3 weist der Aufnahmebehälter 2 der Fig. 3 eine Fläche 15 auf, die sich vorzugsweise unmittelbar frontal zur Bodenfläche 3 erstreckt und an diese angrenzt. Diese dient dazu, daß wenn das Tier über die Öffnung 10 Futter vom Futterstück 1 entnimmt, es zum einen sauber und trocken stehen kann, und zum anderen evtl. noch abfallendes Futter auf der Fläche 15 trocken und sauber zum Liegen kommt. Die Fläche 15 kann sich auch über die Seitenflächen 4 und 5 hinweg ausdehnen, vorzugsweise in Abhängigkeit davon, wie weit sich die Öffnung 10 erstreckt. Weiterhin kann die Fläche 15 dazu dienen, falls der Aufnahmebehälter 2 nicht am Gehege- oder Käfigboden aufliegt, sondern etwas über diesem an der Wand des Käfigs oder Geheges befestigt ist, daß das Tier die Fläche 15 als eine Art Rampe zum Erreichen des Futterstückes 1 benutzen kann. Im Ausführungsbeispiel der Fig. 3 ist weiterhin dargestellt, daß die Öffnung 9, die der Befestigung am Käfig dient, durch andere Befestigungsmittel ersetzt werden kann, im Beispiel der Fig. 3 durch eine oder mehrere Klammer(-n) 14.

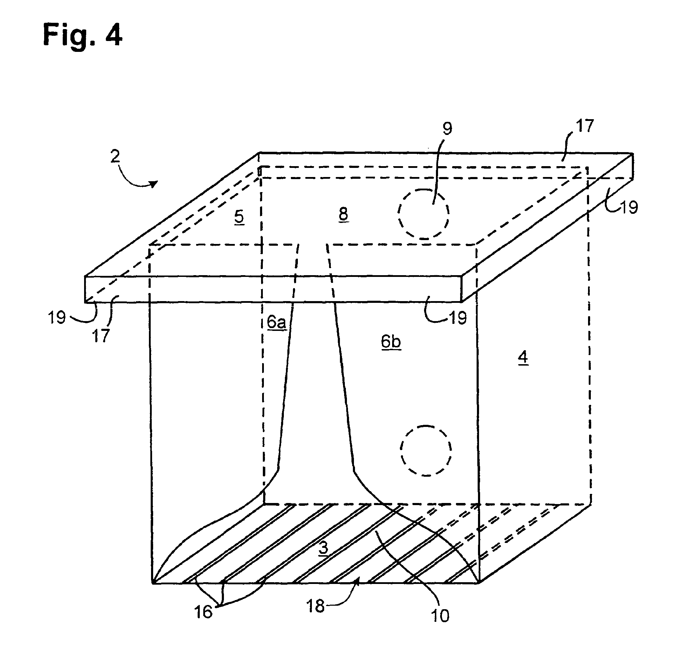

Fig. 4 zeigt noch ein abgewandeltes Ausführungsbeispiel des Aufnahmebehälters 2. Die Bodenfläche 3 ist im vorliegenden Fall nicht massiv gestaltet, sondern durchbrochen. Gemäß der Fig. 4 ist die Bodenfläche 3 durch Stäbe 16 ersetzt. Es ist jedoch auch möglich, daß anstelle von Stäben 16 eine gitterartige Struktur verwendet werden kann. Die Abstände der Stäbe 16 bzw. die Maschenweite des Gitters sind vorzugsweise so gewählt, daß das Tier durch die so entstehende Öffnung 18 hindurch Futter vom daraufliegenden Futterstück 1 entnehmen kann. Das Tier hat so die Möglichkeit, den Futterblock 1 über die Öffnungen 10 und 18 gleichmäßig abzufressen, wobei ihm bedingt durch die Führung des Aufnahmebehälters 2 fortlaufend frisches Futter zugeführt wird.

Weiterhin ist vorgesehen, daß nicht nur die Bodenfläche 3 durch stab- oder gitterartige Strukturen ersetzt ist, sondern auch ganz oder teilweise angrenzende weitere Flächen 4, 5, 6a, 6b, 8 des Aufnahmebehälters 2. Fig. 4 zeigt zudem einen Aufnahmebehälter 2, der einen Deckel 17 trägt. Der Deckel 17 kann zum einen dazu dienen, das darin enthaltene Futter vor Witterungseinflüssen zu schützen, was insbesondere dann vorteilhaft ist, wenn der Käfig oder das Gehege im Freien aufgestellt ist, und zum anderen kann er dazu dienen, kletterfreudige Tiere davon abzuhalten, das Futter nicht über die Öffnung 10 im unteren Bereich des Aufnahmebehälters 2 zu entnehmen, sondern durch Hochklettern von der Oberseite des Aufnahmebehälters 2 her. Es ist weiterhin vorgesehen, daß der Deckel 17 auch einen Überstand 19 aufweisen kann, der über die Flächen 4, 5, 6a, 6b, 8 des Aufnahmebehälters 2 hinwegsteht, so daß das Tier ungestört von äußeren Witterungsbedingungen wie Sonne, Regen oder Schnee das Futter aufnehmen kann.

In den vorliegenden Ausführungsbeispielen der Fig. 1 bis 4 ist das Futterstück 1 quaderförmig dargestellt, und auch der Aufnahmebehälter 2 weist eine daran angepaßte Quaderform auf. Es ist jedoch möglich, daß das Futterstück 1 und mit ihm der Aufnahmebehälter 2 eine davon abweichende Form aufweist, beispielsweise eine zylindrische, dreieckige oder hexagonale Grundform.

Der Aufnahmebehälter 2 ist aus stabilem, leicht zu reinigenden Material gefertigt, vorzugsweise aus Metall, insbesondere Edelstahl aus einem einzigen Blechzuschnitt abgekantet, oder aus Hartkunststoff. Die Größe des Aufnahmebehälters 2 und die des Futterstückes 1 ist in Abhängigkeit von der zu fütternden Tierart, der Anzahl der Tiere und den persönlichen und zeitlichen Gegebenheiten des Halters frei wählbar. Vorzugsweise ist für durchschnittliche Nagetiere vorgesehen, daß die Maße des Aufnahmebehälters 2 in einem Bereich von Breite 10 - 40 cm, Höhe 10 - 50 cm und Tiefe 5 - 20 cm liegen, wobei die Breiten- und Tiefenmaße der Futterstücke 1 um jeweils einige Millimeter geringer sind.

## Patentansprüche

1. Fütterungsgystem, insbesondere für Nagetiere, zum Verfüttern von getrockneten Futterpflanzen, bestehend aus einem Aufnahmebehälter (2) zur Aufnahme von Futter und zu einem Futterstück (1) gepreßtem Futter, wobei, die Maße von Aufnahmebehälter (2) und Futterstück (1) so aufeinander abgestimmt sind, daß das Futterstück (1) in Breite (B) und Tiefe (T) annähernd der durch Flächen (4, 5, 6a, 6b, 8) gebildeten Breite (b) und Tiefe (t) des Innenraumes des Aufnahmebehälters (2) entspricht, **dadurch gekennzeichnet, daß** der Aufnahmebehälter (2) an zumindest einer der Bodenfläche (3) zugewandten Seite (6a, 6b) eine öffnung (10) aufweist, die sich im wesentlichen im unteren Bereich des Aufnahmebehälters erstreckt, und im Aufnahmebehälter (2) mehrere Futterstücke (1) übereinander stapelbar sind.

2. Fütterungssystem nach Anspruch 1,
**dadurch gekennzeichnet, daß**
die Öffnung (10) entlang der seiten flächen (4, 5) und der Frontflächen (6a, 6b) verläuft, insbesondere mit abgerundeten Kanten

3. Fütterungssystem nach Anspruch 2, **dadurch gekennzeichnet, daß** ein zur Oberseite (7) weisender Rand (13) an der Bodenfläche (3) vorgesehen ist.

4. Fütterungssystem nach Anspruch 2 oder 3, **dadurch gekennzeichnet, daß** eine Fläche (15) vorgesehen ist, welche außerhalb des Aufnahmebehälters (2) entlang der Öffnung (10) verläuft.

5. Fütterungssystem nach einem der Ansprüche 2 bis 4, **dadurch gekennzeichnet, daß** zumindest die Bodenfläche (3) stab- (16) und/oder gitterförmig gestaltet ist, wobei die Abstände zwischen den Stäben (16) bzw. die Maschenweite des Gitters so gewählt sind, daß das Futter durch die durch die Stäbe (16) bzw. das Gitter gebildeten Öffnungen (18) vom Futterstück (1) entnehmbar ist.

6. Fütterungssystem nach einem der Ansprüche 2 bis 5, **dadurch gekennzeichnet, daß** auf dem Aufnahmebehälter (2) ein Deckel (17) vorgesehen ist.

7. Fütterungssystem nach einem der Ansprüche 2 bis 6, **dadurch gekennzeichnet, daß** der Aufnahmebehälter (2) aus Metall, insbesondere einem Edelstahl-Blechzuschnitt, oder aus Kunststoff besteht.

## Claims

1. A feeding system, in particular for feeding dried forage plants to rodents, the feeding system comprising a receiving container (2) for receiving fodder and fodder pressed into a piece (1) of fodder, wherein the dimensions of the receiving container (2) and the fodder piece (1) are coordinated such that width (B) and depth (T) of the fodder piece (1) roughly correspond to width (b) and depth (t) of the interior space of the receiving container (2) made up by surfaces (4, 5, 6a, 6b, 8),
**characterized in that**
the receiving container (2) includes an aperture (10) in at least one side (6a, 6b) facing the bottom surface (3), which aperture essentially opens within the lower portion of the receiving container, and **in that** multiple fodder pieces (1) are stackable on top of each other within the receiving container (2).

2. The feeding system of claim 1, **characterized in that** the aperture (10) runs along the lateral surfaces (4, 5) and the front surfaces (6a, 6b), in particular having rounded edges.

3. The feeding system of claim 2, **characterized in that** a rim (13) pointing to the upper side (7) is provided at the bottom surface (3).

4. The feeding system of claim 2 or claim 3, **characterized in that** there is provided a surface (15) running outside the receiving container (2) along the aperture (10).

5. The feeding system of any of claims 2 to 4, **characterized in that** at least the bottom surface (3) is designed to have a rod- (16) and/or grate-like shape, the distances between the rods (16) or the mesh size of the grate being selected such that the fodder is extractable from the fodder piece (1) through openings (18) formed by the rods (16) and the grate, respectively.

6. The feeding system of any of claims 2 to 5, **characterized in that** a cover (17) is provided on the receiving container (2).

7. The feeding system of any of claims 2 to 6, **characterized in that** the receiving container (2) is made from metal, in particular a pre-cut high-grade steel sheet, or from plastics.

## Revendications

1. Système d'alimentation, en particulier pour rongeurs, destiné à la distribution de plantes fourragères séchées et constitué d'un réceptacle (2) conçu pour recevoir de la nourriture et du fourrage comprimé en un bloc alimentaire (1), sachant que les cotes du réceptacle (2) et du bloc alimentaire (1) sont mutuellement coordonnées de telle sorte que la largeur (B) et la profondeur (T) dudit bloc alimentaire (1) correspondent approximativement à la largeur (b) et à la profondeur (t) de l'espace interne dudit réceptacle (2), auxquelles des surfaces (4, 5, 6a, 6b, 8) donnent naissance, **caractérisé par le fait que** le réceptacle (2) présente, sur au moins une face (6a, 6b) tournée vers la surface de fond (3), un orifice (10) qui s'étend pour l'essentiel dans la région inférieure dudit réceptacle, plusieurs blocs alimentaires (1) pouvant être mutuellement superposés dans ledit réceptacle (2).

2. Système d'alimentation selon la revendication 1, **caractérisé par le fait que** l'orifice (10) s'étend le long des surfaces latérales (4, 5) et des surfaces frontales (6a, 6b), notamment avec des arêtes arrondies.

3. Système d'alimentation selon la revendication 2, **caractérisé par le fait qu'**un rebord (13), orienté vers la face supérieure (7), est prévu sur la surface de fond (3).

4. Système d'alimentation selon la revendication 2 ou 3, **caractérisé par** la présence d'une surface (15) s'étendant à l'extérieur du réceptacle (2), le long de l'orifice (10).

5. Système d'alimentation selon l'une des revendications 2 à 4, **caractérisé par le fait qu'**au moins la surface de fond (3) est réalisée sous la forme de barreaux (16) et/ou d'un grillage, les espacements entre les barreaux (16), respectivement la largeur de mailles du grillage, étant choisi(e)s de telle sorte que le fourrage puisse être prélevé du bloc alimentaire (1) à travers les ouvertures (18) respectivement formées par lesdits barreaux (16) ou par ledit grillage.

6. Système d'alimentation selon l'une des revendications 2 à 5, **caractérisé par le fait qu'**un couvercle (17) est prévu sur le réceptacle (2).

7. Système d'alimentation selon l'une des revendications 2 à 6, **caractérisé par le fait que** le réceptacle (2) est constitué d'un métal, en particulier d'un flan découpé en tôle d'acier fin, ou bien d'une matière plastique.
